(19) Europäisches Patentamt
European Patent Office
Office européen des brevets

(11) **EP 3 429 795 B1**

(12) **EUROPÄISCHE PATENTSCHRIFT**

(45) Veröffentlichungstag und Bekanntmachung des Hinweises auf die Patenterteilung:
**06.05.2020  Patentblatt 2020/19**

(21) Anmeldenummer: **17707322.8**

(22) Anmeldetag: **27.02.2017**

(51) Int Cl.:
**B23K 26/06** (2014.01)

(86) Internationale Anmeldenummer:
**PCT/EP2017/054464**

(87) Internationale Veröffentlichungsnummer:
**WO 2017/157644 (21.09.2017 Gazette 2017/38)**

(54) **LASERSCHWEISSEN VON STAHL MIT LEISTUNGSMODULATION ZUR HEISSRISSVERMEIDUNG**

LASER WELDING OF STEEL WITH POWER MODULATION FOR HOT-CRACKING PREVENTION

SOUDAGE D'ACIER AU LASER AVEC MODULATION DE PUISSANCE POUR ÉVITER LA FISSURATION À CHAUD

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.03.2016  DE 102016204578**

(43) Veröffentlichungstag der Anmeldung:
**23.01.2019  Patentblatt 2019/04**

(73) Patentinhaber: **TRUMPF Laser- und Systemtechnik GmbH 71254 Ditzingen (DE)**

(72) Erfinder:
• SPEKER, Nicolai
  74385 Pleidelsheim (DE)
• SCHÄFER, Marcel
  71254 Ditzingen (DE)
• SCHEIBLE, Philipp
  75428 Illingen (DE)
• GRAF, Thomas
  71154 Nufringen (DE)
• STRITT, Peter
  71229 Leonberg (DE)

(74) Vertreter: **Kohler Schmid Möbus Patentanwälte Partnerschaftsgesellschaft mbB Gropiusplatz 10 70563 Stuttgart (DE)**

(56) Entgegenhaltungen:
**US-A1- 2004 026 381**

• **HEIDER ANDREAS ET AL: "Power modulation to stabilize laser welding of copper", JOURNAL OF LASER APPLICATIONS, AMERICAN INSTITUTE OF PHYSICS, 2 HUNTINGTON QUADRANGLE, MELVILLE, NY 11747, Bd. 27, Nr. 2, 16. Januar 2015 (2015-01-16), XP012193695, DOI: 10.2351/1.4906127 [gefunden am 1901-01-01]**

**Beschreibung**

Die Erfindung betrifft ein Verfahren zum Laserstrahlweißen eines Werkstücks, wobei ein auf das Werkstück gerichteter Laserstrahl relativ zum Werkstück bewegt wird, sodass das Werkstück entlang einer Schweißnaht geschweißt wird,
wobei sich in der Umgebung des Laserstrahls auf dem Werkstück ein Schmelzbad ausbildet, wobei das Schmelzbad eine charakteristische Oszillationsfrequenz $f_{co}$ aufweist,
wobei eine Laserleistung des Laserstrahls zumindest zeitweise mit einer Modulationsfrequenz f und einer Modulationsamplitude $\Pi$ moduliert wird, mit

$$\Pi = 1 - \frac{P\min}{P\max},$$

mit $P_{min}$: minimale Laserleistung während einer Modulationsperiode, und $P_{max}$: maximale Laserleitung während einer Modulationsperiode,
und wobei das Werkstück aus Stahl, insbesondere Vergütungsstahl oder Einsatzstahl, gefertigt ist.

Ein solches Verfahren ist aus der US 6,900,410 B2, welche den nächstliegenden Stand der Technik bildet, bekannt geworden.

Laserstrahlschweißen wird zum Schweißen von Werkstücken eingesetzt, die insbesondere schnell (mit hoher Vorschubgeschwindigkeit) gefertigt werden sollen oder nur einen geringen thermischen Verzug erfahren sollen. Mit Laserstrahlschweißen können zudem auch schmale und schlanke Schweißnahtformen gefertigt werden.

Beim Laserstrahlschweißen entsteht auf dem Werkstück um den Brennfleck des Laserstrahls ein so genanntes Schmelzbad von aufgeschmolzenem Werkstückmaterial. Dieses wandert im Wesentlichen mit dem Laserstrahl, der relativ zum Werkstück propagiert; entfernt vom Laserstrahl erstarrt das Werkstückmaterial wieder. Das wieder erstarrte Werkstückmaterial bildet eine Schweißnaht aus.

Bei der Erstarrung des Werkstückmaterials können sich so genannte Heißrisse bilden. Die Heißrisse können die Festigkeit der Schweißnaht stark beeinträchtigen. Daher ist es wünschenswert, den Laserschweißprozess so zu führen, dass Heißrisse in der Schweißnaht möglichst gering gehalten oder ganz vermieden werden.

Die US 6,900,410 B2 beschreibt ein Verfahren zum Laserstrahlschweißen, wobei die Laserleistung gepulst moduliert ist, und wobei die Modulationsfrequenz einer natürlichen Oszillationsfrequenz des Schmelzbades entspricht. Dadurch sollen Schweißdefekte, insbesondere Risse, verhindert werden. Das Laserschweißen erfolgte an Stahlplatten.

Die DE 601 11 790 T2 (auch US 6,483,072 B2) beschreibt ein Laserschweißverfahren, bei dem die Laserleistung periodisch gepulst verändert wird, wobei eine Grundausgangsleistung 50% oder mehr einer Spitzenausgangsleistung beträgt und die Leistungsfluktuationsfrequenz 200 Hz oder weniger beträgt. Als Eindringtiefe des Laserstrahls werden 10 mm oder mehr vorgeschlagen. Das Verfahren soll Schweißfehler vermeiden.

Die DE 10 2009 056 592 A1 schlägt vor, beim Laserschweißen von metallischen Werkstücken mittels Leitungsmodulation die Energieeinbringung in das Schweißbad zu steuern. Auf einem Laserleistungsgrundniveau wird pulsartig eine höhere Laserleistung überlagert. Als Frequenzen werden 50 bis 500 Hz vorgeschlagen. Die JP H09 108872 A schlägt ebenfalls eine gepulste Leistungsmodulation beim Laserschweißen vor. Galvanisierte Stahlplatten werden bei einer Frequenz von ca. 50 Hz bearbeitet.

In M. Schneider, "Von Werkzeugstahl bis zur Superlegierung", Laser-Journal 4/2013, S. 24-27, wird vorgeschlagen, beim Laserstrahlschweißen einen gepulsten Laser einzusetzen, und mit Hilfe von thermischer Pulsformung eine Anpassung an das Absorptionsverhalten des Werkstoffs vorzunehmen. Mit Nachpulsphasen sollen sich Heißrisse verhindern lassen. Weiterhin könne durch Modulation der Laserleistung die Schmelzbad-Dynamik und damit die Erstarrungsmorphologie beeinflusst werden.

Die vorgeschlagenen Modulationen der Laserleistung können oft die Rissneigung reduzieren, in vielen Fällen finden sich jedoch auch bei Anwendung von modulierter Laserleistung in den Schweißnähten von Werkstücken noch erhebliche Mengen von Heißrissen. Dies gilt im Besonderen für Werkstücke aus Stahl, wenn die Laserleistung wie in der US 6,900,410 B2 empfohlen mit einer Frequenz entsprechend der natürlichen Oszillationsfrequenz des Schmelzbades moduliert wird.

Von A. Heider et al., Journal of Laser Applications, Vol. 27, No. 2, wurde eine Laserleistungsmodulation vorgeschlagen, um das Laserschweißen von Kupfer zu stabilisieren. Eine sinusförmige Modulation wurde angewandt. Weiterhin wurde vorgeschlagen, eine normalisierte Modulationsamplitude $\Pi$ und eine normalisierte Modulationsfrequenz $\Lambda$ zu betrachten. Die Anwendung von Leistungsmodulation ist auch weiterhin für Aluminium- Werkstoffe vorgeschlagen worden, z.B. P. Stritt et al., "Heißrisskriterium für das randnahe Laserstrahlschweißen von Aluminium", Beitrag Workshop - Heißrissbildung beim Laserstrahlschweißen, Universität Stuttgart 18.11.2014. Es wurde eine sinusförmige Modulation mit einer Frequenz von 40 Hz angewandt.

Aus M. Schäfer et al., "Analysing Hot Crack Formation in Laser Welding of Tempered Steel", Tagungsbeitrag "Lasers in Manufacturing Conference 2015", Wissenschaftliche Gesellschaft Lasertechnik e.V. (WLT), ist es bekannt, dass bei Verwendung eines Lasers mit hoher Strahlgüte (Strahlparameterprodukt SPP von 2 mm*mrad) und hohem Abbildungsverhältnis Heißrisse vermieden werden können. Auch wurden beim Durchschweißen keine Heißrisse beobachtet. Die Verwendung von Lasern hoher Güte ist jedoch teuer und geht mit einer veränderten, schmalen Nahtgeometrie einher; ein Durchschweißen kommt zudem nur für bestimmte Werkstücktypen in Betracht.

Aus der DE 10 2012 021 755 A1 ist es bekannt geworden, beim Laserstrahlschweißen zur Vermeidung von Heißrissen eine durchgängige Schweißnaht aus Schweißnahtteilstücken zusammenzusetzen, wobei zwischen der Fertigung direkt aneinander angrenzender Schweißnahtteilstücke eine zeitliche Unterbrechung eingehalten wird. Dieses Vorgehen ist aufwändig und erfordert geeignete schnelle Scanner-Optiken.

## Aufgabe der Erfindung

Der Erfindung liegt die Aufgabe zugrunde, beim Laserstrahlschweißen von Werkstücken aus Stahl die Bildung von Heißrissen auf einfache Weise weiter zu reduzieren - bis hin zur gänzlichen Vermeidung derselben.

## Kurze Beschreibung der Erfindung

Diese Aufgabe wird gelöst durch ein Verfahren der eingangs genannten Art, das dadurch gekennzeichnet ist,
dass die Modulationsfrequenz f so gewählt ist, dass für eine normierte, charakteristische Oszillationsfrequenz $\Lambda_{co}$ des Schmelzbades und eine normierte Modulationsfrequenz $\Lambda$ gilt:

$\Lambda \geq 2{,}2*\Lambda_{co}$, bevorzugt $\Lambda \geq 2{,}7*\Lambda_{co}$,

$$\Lambda = \frac{f \cdot d_f}{v},$$

mit v: Vorschubgeschwindigkeit des Laserstrahls relativ zum Werkstück, und $d_f$: Durchmesser eines Laserstrahl-Brennflecks des Laserstrahls,

$$\Lambda_{co} = \frac{f_{co}^{test} \cdot d_{f,co}^{test}}{v_{co}^{test}}$$

und bestimmt aus einer Testmessung mit dem Laserstrahl ohne Modulation der Laserleistung, mit $f_{co}^{test}$: gemessene charakteristische Oszillationsfrequenz bei der Testmessung; $d_{f,co}^{test}$: Durchmesser des Laserstrahl-Brennflecks bei der Testmessung; $v_{co}^{test}$: Vorschubgeschwindigkeit des Laserstrahls relativ zum Werkstück bei der Testmessung.

Die Schweißbadoszillation ist eine im Wesentlichen periodische Vergrößerung und Verkleinerung des Schmelzbades, die im Allgemeinen (wenn nicht Gegenmaßnahmen getroffen werden) beim Laserstrahlschweißen auftritt, ungeachtet von etwaigen Schweißspritzern. Sie kann beispielsweise durch den zeitlichen Verlauf der Schmelzbadlänge erfasst werden, die thermografisch mit einer geeigneten IR-Kamera erkannt werden kann.

Im Rahmen der vorliegenden Erfindung wurde herausgefunden, dass der Wahl der Modulationsfrequenz f bzw. der normierten Modulationsfrequenz $\Lambda$ beim Laserstrahlschweißen von Werkstoffen aus Stahl eine erhebliche Bedeutung für die Vermeidung von Heißrissen zukommt. Bei Anwendung einer Modulationsfrequenz f (bzw. normierten Modulationsfrequenz $\Lambda$), die der charakteristischen Oszillationsfrequenz $f_{co}$ (bzw. der normierten charakteristischen Oszillationsfrequenz $\Lambda_{co}$) entspricht, tritt zwar bereits eine gewisse Reduktion der Heißrisse gegenüber dem unmodulierten Laserstrahlschweißen ein. Wenn aber die normierte Modulationsfrequenz $\Lambda$ deutlich größer als die normierte, charakteristische Oszillationsfrequenz $\Lambda_{co}$ des Schmelzbades gewählt wird, kann eine noch deutlichere Reduktion der Heißrisse erreicht werden, und somit eine erheblich bessere Schweißnahtqualität erreicht werden.

Das Schmelzbad oszilliert mit der charakteristischen Oszillationsfrequenz $f_{co}$, wenn das Werkstück mit dem Laserstrahl ohne Modulation der Laserleistung, aber unter sonst gleichen Bedingungen geschweißt wird, ungeachtet etwaiger Schweißspritzer. Die charakteristische Oszillationsfrequenz $f_{co}$ hängt insbesondere vom Werkstück ab.

Relevant für die erfindungsgemäße Einstellung der Modulationsfrequenz f beim Laserstrahlschweißen sind lediglich die Verhältnisse der normierten Frequenzen. Die normierte charakteristische Oszillationsfrequenz $\Lambda_{co}$ kann mit einer Testmessung vorab bestimmt werden, ggf. auch mit abweichender Vorschubgeschwindigkeit und/oder abweichendem Durchmesser des Brennflecks des Lasers und sonst gleichen Bedingungen wie beim eigentlichen späteren Laserstrahlschweißen. Bei der Testmessung wird keine Leistungsmodulation angewandt; die mittlere Laserleistung entspricht aber dem späteren eigentlichen Laserstrahlschweißen. Falls die Testmessung und die eigentliche (modulierte) Laserstrahlschweißung mit gleicher Vorschubgeschwindigkeit und gleichem Durchmesser des Laserstrahl-Brennflecks stattfinden, ist $f_{co}=f_{co}^{test}$, und es gilt vereinfacht $f \geq 2{,}2*f_{co}^{test}$, bevorzugt $f \geq 2{,}7*f_{co}^{test}$. Eine im Rahmen der Erfindung durchgeführte Testmessung kann beispielsweise in Form einer "Sandwich"-Schweißung und/oder mithilfe thermografischer Messtechnik erfolgen.

In der Praxis liegen die Modulationsfrequenzen f meist zwischen 5 und 200 Hz. Die Modulation wird typischerweise während des gesamten Laserschweißprozesses der Schweißnaht angewandt; jedoch ist während Durchschweißungen (die in der Regel keine Heißrisse verursachen) die Modulation entbehrlich.

Das erfindungsgemäße Verfahren ist leicht umsetzbar, insbesondere mit einer üblichen Leistungssteuerung für Laser (etwa die Software TruControl der Firma TRUMPF), und kann mit einer mittleren Strahlgüte (Strahlparameterprodukt SPP beispielsweise von 16 mm*mrad, oder auch 12 mm*mrad $\leq$ SPP $\leq$ 20 mm*mrad) umgesetzt werden. Das erfindungsgemäße Laserstrahlschweißen kann mit einer herkömmlichen Bearbeitungsoptik (etwa mit einer Kollimationslinse und Fokussierlinse) erfolgen; zusätzliche Strahlumformungsoptiken sind nicht erforderlich. Die Nahtform kann weitestgehend beibehalten werden.

Das erfindungsgemäße Verfahren kann insbesondere dazu eingesetzt werden, Axialrundnähte oder Radialrundnähte zu fertigen. Die bearbeiteten Werkstücke können insbesondere Getriebeteile (wie Schalträder oder Zwischenwellen) oder lasergeschweißte Stahlkolben sein.

Bevorzugte Ausführungsformen der Erfindung

Bei einer bevorzugten Variante des erfindungsgemäßen Verfahrens gilt für die normierte, charakteristische Oszillationsfrequenz $\Lambda_{co}$ des Schmelzbades und die normierte Modulationsfrequenz $\Lambda$ weiterhin: $\Lambda \leq 8,5*\Lambda_{co}$, bevorzugt $\Lambda \leq 7,3*\Lambda_{co}$. Bei zu großen normierten Oszillationsfrequenzen wurde in der Praxis wieder eine gewisse Zunahme der Heißrisse beobachtet. Insgesamt stellten sich bei den untersuchten Stahlwerkstoffen im Intervall $2,2*\Lambda_{co} \leq \Lambda \leq 8,5*\Lambda_{co}$, und bevorzugt $2,7*\Lambda_{co} \leq \Lambda \leq 7,3*\Lambda_{co}$, die besten Ergebnisse, d.h. die wenigsten Heißrisse, ein.

Bevorzugt ist weiterhin eine Variante, bei der für die normierte Modulationsfrequenz $\Lambda$ weiterhin gilt: $0,2 \leq \Lambda \leq 1,0$. Bei einer normierten Modulationsfrequenz unter 0,2 haben sich in der Praxis erhebliche Schwankungen in der Einschweißtiefe gezeigt, die durch ein $\Lambda \geq 0,2$ vermieden bzw. auf ein zulässiges Minimum reduziert werden können. Bei zu großen normierten Modulationsfrequenzen wurde eine Zunahme der Heißrisse beobachtet, die durch ein $\Lambda \leq 1,0$ vermieden werden kann. Bevorzugt ist auch $0,25 \leq \Lambda \leq 0,9$, und besonders bevorzugt $0,3 \leq \Lambda \leq 0,8$.

Vorteilhaft ist auch eine Variante, bei der für die Modulationsamplitude $\Pi$ gilt: $\Pi > 0,5$, bevorzugt $\Pi \geq 0,75$, besonders bevorzugt $\Pi \geq 0,8$. Bei diesen normierten Modulationsamplituden $\Pi$ trat eine besonders gute Rissvermeidung auf. Bevorzugt ist auch $\Pi \geq 0,6$.

Ebenfalls vorteilhaft ist eine Variante, bei der für die Modulationsamplitude $\Pi$ gilt: $\Pi \leq 0,95$, bevorzugt $\Pi \leq 0,85$, besonders bevorzugt $\Pi \leq 0,80$. Auch bei diesen normierten Modulationsamplituden trat eine besonders gute Rissvermeidung auf. Bevorzugt gilt $0,6 \leq \Pi \leq 0,95$, und insbesondere $0,75 \leq \Pi \leq 0,85$. Bevorzugt findet das Verfahren vollständig im Tiefschweißregime statt, so dass die Metalldampf-Kapillare zu keinem Zeitpunkt kollabiert.

Bei einer bevorzugten Ausführungsform wird das Laserstrahlschweißen mit einer Einschweißtiefe EST ausgeführt, mit 1,0 mm < EST < 10,0 mm, bevorzugt 3,5 mm $\leq$ EST $\leq$ 8,0 mm. Bei diesen Einschweißtiefen ist die Vermeidung von Heißrissen in Stahl oftmals schwierig; mit der erfindungsgemäßen Wahl der (normierten) Modulationsfrequenz kann jedoch eine deutliche Reduzierung der Heißrissneigung erreicht werden. Insbesondere eignet sich das erfindungsgemäße Laserschweißverfahren dazu, während des gesamten Schweißprozesses im Tiefschweißregime zu bleiben (und nicht ins Wärmeleitregime überzuwechseln), was die Nahtqualität verbessert.

Vorteilhafter Weise wird in einer Variante die Laserleistung näherungsweise sinusförmig moduliert, insbesondere wobei die Sinusform durch wenigstens 12, bevorzugt wenigstens 18, Stützpunkte je Modulationsperiode angenähert ist. Durch die Sinusform werden hohe Frequenzanteile in der Modulation vermieden, was sich als günstig für eine geringe Heißrisswahrscheinlichkeit erwiesen hat. Die Nutzung von Stützpunkten ist besonders einfach. Alternativ kann auch eine gepulste Modulation eingesetzt werden.

Bevorzugt ist weiterhin eine Variante, bei der der Laserstrahl mit einem Festkörperlaser, etwa einem Nd-YAG oder ein Yb-YAG-Laser, erzeugt wird. Festkörperlaser zeigen ein bezüglich ihres Energieabsorptionsmechanismus in Hinblick auf Stahlwerkstoffe (insbesondere deren Schmelz- und Verdampfungstemperatur, mechanische Festigkeit etc.) ein günstiges Verhalten, das die Rissvermeidung unterstützt.

*Varianten zur Bearbeitung von Anfangs- und Endrampen einer Schweißnaht*

Besonders bevorzugt ist eine Variante des erfindungsgemäßen Verfahrens, die vorsieht, dass eine mittlere Laserleistung des Laserstrahls beim Laserstrahlschweißen eines Anfangsbereichs der Schweißnaht mit fortschreitendem Schweißweg erhöht wird, insbesondere linear erhöht wird, und eine mittlere Laserleistung des Laserstrahls beim Laserstrahlschweißen eines Endbereichs der Schweißnaht mit fortschreitendem Schweißweg verringert wird, insbesondere linear verringert wird,
und dass während des Laserstrahlschweißens des Anfangsbereichs und des Endbereichs die Laserleistung moduliert wird. Die erfindungsgemäß vorgesehene Modulation der Laserleistung, mit den oben erläuterten Vorgaben für die (normierte) Modulationsfrequenz, ist auch gut dazu geeignet, Heißrisse im Bereich des Anfangs- und Endbereichs einer Schweißnaht, in denen die mittlere (durchschnittliche) Laserleistung kontinuierlich oder auch in mehreren Stufen gesteigert bzw. abgesenkt wird ("Rampen"), zu verringern bzw. zu vermeiden. Dies gilt besonders für den Fall, dass der Anfangs- oder Endbereich in einem Überlappungsbereich zweier Schweißnähte oder Schweißnahtabschnitte liegt. Durch die Rampen kann der Schweißprozess vergleichmäßigt werden, was lokale Schweißdefekte vermeidet. Die normierte Modulationsamplitude $\Pi$ und die normierte Modulationsfrequenz $\Lambda$ bleiben bevorzugt beim Laserschweißen des gesamten Werkstücks, einschließlich des Anfangsbereichs und des Endbereichs, jeweils gleich; alternativ kann die Modulationsfrequenz $\Lambda$ für verschiedene Abschnitte der Schweißnaht unterschiedlich gewählt werden, um die Frequenzverhältnisse von Leistungsmodulation und charakteristischer Oszillation besser aufeinander abzustimmen.

Bei einer bevorzugten Weiterentwicklung dieser Variante ist vorgesehen, dass auch beim Laserstrahlschweißen eines Mittelbereichs der Schweißnaht zwischen dem Anfangsbereich und dem Endbereich die Laserleistung moduliert wird, und dass das Laserstrahlschweißen im Mittelbereich als Einschweißung erfolgt. Dadurch können in der gesamten Schweißnaht Heißrisse reduziert bzw. vermieden werden. Einschweißung bedeutet, dass der Laserstrahl an einem Grund im Werkstück endet, und nicht das Werkstück durchstößt.

Eine alternative Weiterentwicklung sieht vor, dass beim Laserstrahlschweißen eines Mittelbereichs der Schweißnaht zwischen dem Anfangsbereich und dem Endbereich die Laserleistung nicht moduliert wird, und dass das Laserstrahlschweißen im Mittelbereich als Durchschweißung erfolgt. Im Bereich einer Durchschweißung haben die Erfinder im Allgemeinen auch ohne Leistungsmodulation keine Heißrisse beobachtet, so dass im Mittelbereich auf eine Modulation der Laserleistung verzichtet werden kann. Im Anfangsbereich und Endbereich ist jedoch die Leistungsmodulation mit der erfindungsgemäßen Bedingung für die normierte Modulationsfrequenz anzuwenden. Anfangs- und Endbereich einer Schweißnaht werden typischerweise als Einschweißung ausgeführt. Durchschweißung bedeutet, dass der Laserstrahl das Werkstück durchstößt.

Bevorzugt ist auch eine Weiterentwicklung, bei der beim Laserstrahlschweißen des Mittelbereichs eine konstante mittlere Laserleistung angewandt wird. Dadurch kann eine gleichmäßige Schweißnaht erhalten werden.

Bei einer bevorzugten Weiterentwicklung überlappen der Anfangsbereich und der Endbereich der Schweißnaht jeweils mit einem anderen Teil der Schweißnaht. Die Schweißnaht kann dann ringförmig geschlossen ausgebildet werden. Risse im Schweißnahtüberlapp von Fügeverbindungen bei Werkstücken aus Stahl waren bislang schwer zu vermeiden. Mit dem erfindungsgemäßen Verfahren lassen sich Risse auf einfache Weise, insbesondere ohne große Investitionen in die Anlagen- und Systemtechnik, im Schweißüberlapp vermeiden.

Vorteilhafter Weise gehören die anderen Teile der Schweißnaht jeweils zum Mittelbereich der Schweißnaht. Mit anderen Worten, eine Rampe überlappt nicht mit einer anderen Rampe, sondern mit einem normalen Teil der Schweißnaht. Dadurch werden lokale Schwachstellen in der Schweißnaht vermieden; die Schweißnaht wird besonders hochwertig.

Bevorzugt ist die Schweißnaht eine Axialrundnaht oder Radialrundnaht, insbesondere wobei der Anfangsbereich und der Endbereich nach vollständiger Fertigung der Schweißnaht im Umfangsrichtung unmittelbar aufeinander folgen. Für diese Nahttypen hat sich das erfindungsgemäße Verfahren besonders bewährt. Durch ein unmittelbares Aufeinanderfolgen von Anfangsbereich und Endbereich können Doppelschweißungen minimiert werden.

Bei einer ebenfalls bevorzugten Weiterentwicklung überlappen der Anfangsbereich und/oder der Endbereich der Schweißnaht jeweils mit einem Teil einer anderen Schweißnaht. Dadurch können Schweißnähte aneinander angeschlossen werden, insbesondere für die Fertigung von komplexen Werkstücken. Risse im Schweißnahtüberlapp von Fügeverbindungen bei Werkstücken aus Stahl waren bislang schwer zu vermeiden. Mit dem erfindungsgemäßen Verfahren lassen sich Risse auf einfache Weise, insbesondere ohne große Investitionen in die Anlagen- und Systemtechnik, im Schweißüberlapp vermeiden.

Bevorzugt ist vorgesehen, dass die jeweilige andere Schweißnaht ebenfalls erfindungsgemäß mit rampenartigem Anfangsbereich, Mittelbereich und rampenartigem Endbereich gefertigt ist, und ein jeweiliger Teil der anderen Schweißnaht zum Mittelbereich der anderen Schweißnaht gehört, insbesondere wobei der Anfangsbereich der anderen Schweißnaht und der Endbereich der Schweißnaht nach vollständiger Fertigung der Schweißnaht und der anderen Schweißnaht unmittelbar aufeinander folgen. Mit anderen Worten, eine Rampe überlappt nicht mit einer anderen Rampe der jeweils anderen Schweißnaht, sondern mit einem normalen Teil der jeweils anderen Schweißnaht. Dadurch werden lokale Schwachstellen in der vereinten Schweißnaht vermieden; die vereinte Schweißnaht wird besonders hochwertig. Durch ein unmittelbares Aufeinanderfolgen von Anfangsbereich der anderen Schweißnaht und Endbereich der Schweißnaht können Doppelschweißungen minimiert werden.

Vorteilhaft ist auch eine Verfahrensvariante, bei der beim Laserstrahlschweißen des Werkstücks ein Zusatzmaterial zugeführt wird, welches sich im Schmelzbad verteilt, insbesondere wobei das Zusatzmaterial als ein Zusatzdraht zugeführt wird. Durch das Zusatzmaterial kann die Qualität der Schweißnaht verbessert werden, und insbesondere eine verbesserte Festigkeit erreicht werden. Das Zusatzmaterial ermöglicht das Einbringen von chemischen Elementen in das Schmelzbad bzw. die Schweißnaht, die in den zu verschweißenden Werkstückteilen nicht oder nicht in der für die Schweißnaht gewünschten Konzentration vorhanden sind. Durch die Modulation der Laserleistung wird auf die Schmelzbaddynamik eingewirkt, und es kann eine besonders gute Durchmischung der Schweißnaht bzw. der Fügezone mit dem Zusatzmaterial erreicht werden. Bei Verwendung eines Zusatzmaterials hat sich eine hohe Modulationstiefe der Laserleistung, insbesondere mit $\Pi \geq 0,7$, bevorzugt $\Pi \geq 0,8$, besonders bewährt. Das Zusatzmaterial bzw. der Zusatzdraht kann insbesondere nickelhaltig oder siliziumhaltig sein.

Eine Weiterentwicklung dieser Variante sieht vor, dass beim Laserstrahlschweißen des Werkstücks zwei Werkstückteile miteinander verschweißt werden, die aus unterschiedlichen Materialien gefertigt sind. Durch das zugeführte Zusatzmaterial kann eine Schweißnaht mit vermittelnden Eigenschaften eingerichtet werden, so dass eine gute mechanische Verbindung zu den Materialien beider Werkstückteile eingerichtet werden kann. Die beiden Werkstückteile können insbesondere aus unterschiedlichen Typen von Stahl gefertigt sein. Die Werkstückteile sind bevorzugt bezüglich der Richtung des Laserstrahls hintereinander angeordnet, wobei das Schmelzbad durch das vordere (obere) Werkstückteil hindurch in das dahinterliegende (untere) Werkstückteil hinein reicht; typischerweise liegt wenigstens 1/3 der Tiefenerstreckung des Schmelzbades (bzw. der späteren Schweißnaht) im hinteren (unteren) Werkstückteil. Im Rahmen der Leistungsmodulation kann auch hier eine gute Durchmischung des Schweißbades erreicht werden.

Vorteilhafter Weise ist eines der Werkstückteile aus Stahl, insbesondere Vergütungsstahl, gefertigt, und das andere der Werkstückteile aus einem Nicht-Stahl-Werkstoff, insbesondere einer Aluminium-Legierung, gefertigt. Mit dem zugefügten Zusatzmaterial und der durch die erfindungsgemäße Leistungsmodulation verbesserten Durchmischung können auch in diesem Fall Schweißnähte von guter Qualität gefertigt werden.

Detaillierte Beschreibung der Erfindung und Zeichnung

Die Erfindung ist in der Zeichnung dargestellt und wird anhand von Ausführungsbeispielen näher erläutert. Es zeigen:

Fig. 1    ein Diagramm darstellend die relative Risslänge (nach oben aufgetragen) von lasergeschweißten Werkstücken des selben Werkstücktyps mit normierter Oszillationsfrequenz $\Lambda_{co}$ von 0,109, als Funktion der normierten Frequenz $\Lambda$ (nach rechts aufgetragen), für zwei unterschiedliche Modulationstiefen;

Fig. 2    Röntgenaufnahmen von Schweißnähten von Werkstücken, die mit unterschiedlichen normierten Modulationsfrequenzen $\Lambda$ mit einer Modulation der Laserleistung geschweißt wurden;

Fig. 3    eine schematische Querschnittsansicht eines Werkstücks beim Laserstrahlschweißen zur Erläuterung der Erfindung;

Fig. 4    eine schematische Aufsicht auf ein Werkstück beim Laserstrahlschweißen zur Erläuterung der Erfindung;

Fig. 5    ein Diagramm darstellend eine experimentell bestimmte Schmelzbadlänge (nach oben) als Funktion der Zeit (nach rechts), bei einem mit konstanter (unmodulierter) Laserleistung geschweißten Werkstück;

Fig. 6    ein Diagramm darstellend die Fouriertransformation der Daten von Fig. 5, aufgetragen die (Fourier-)Amplitude des jeweiligen Frequenzanteils (nach oben) gegen Frequenz (nach rechts);

Fig. 7    ein Diagramm erläuternd die normierte Frequenz $\Lambda$;

Fig. 8    ein Diagramm erläuternd die normierte Modulationstiefe $\Pi$;

Fig. 9    eine schematische Ansicht eines Werkstücks, an dem eine Axialrundnaht gefertigt werden soll, für die Erfindung;

Fig. 10    ein Diagramm darstellend die durchschnittliche Laserleistung (oben) und die modulierte Laserleistung (unten), jeweils nach oben aufgetragen, als Funktion des Orts, jeweils nach rechts aufgetragen, für eine beispielshafte, erfindungsgemäße Laserschweißung mit Überlapp zweier Schweißnähte, bei Einschweißung;

Fig. 11    ein Diagramm darstellend die durchschnittliche Laserleistung (oben) und die modulierte Laserleistung (unten), jeweils nach oben aufgetragen, als Funktion des Orts, jeweils nach rechts aufgetragen, für eine beispielshafte, erfindungsgemäße Laserschweißung mit Überlapp zweier Schweißnähte, bei Durchschweißung;

Fig. 12    ein Diagramm darstellend die relative Risslänge (nach oben) im Überlappbereich zweier Schweißnähte, bei verschiedenen Modulationsfrequenzen (nach rechts) bei Einschweißung;

Fig. 13    eine Röntgenaufnahme eines Werkstücks aus dem Diagramm von Fig. 12 mit Überlapp zweier Schweißnähte, mit unmodulierter Laserleistung, bei Einschweißung, mit Heißrissbildung;

Fig. 14    eine Röntgenaufnahme eines Werkstücks aus dem Diagramm von Fig. 12 mit Überlapp zweier Schweißnähte, mit bei 114 Hz modulierter Laserleistung, bei Einschweißung, ohne erkennbare Heißrissbildung;

Fig. 15    eine Röntgenaufnahme eines Werkstücks mit Überlapp zweier Schweißnähte, mit unmodulierter Laserleistung, bei Durchschweißung, mit Heißrissbildung im Überlappungsbereich;

Fig. 16    eine Röntgenaufnahme eines Werkstücks mit Überlapp zweier Schweißnähte, mit modulierter Laserleistung, bei Durchschweißung, ohne Heißrissbildung im Überlappbereich;

Fig. 17    Längsschliffe entlang einer geschweißten Schweißnaht, wobei ein Werkstückteil aus S235JR-Stahl von oben auf ein Werkstückteil aus X5CrNi18-10-Stahl unter Zufügen von Zusatzmaterial geschweißt wurde, mit unmodulierter Laserleistung a) und mit erfindungsgemäß modulierter Laserleistung b).

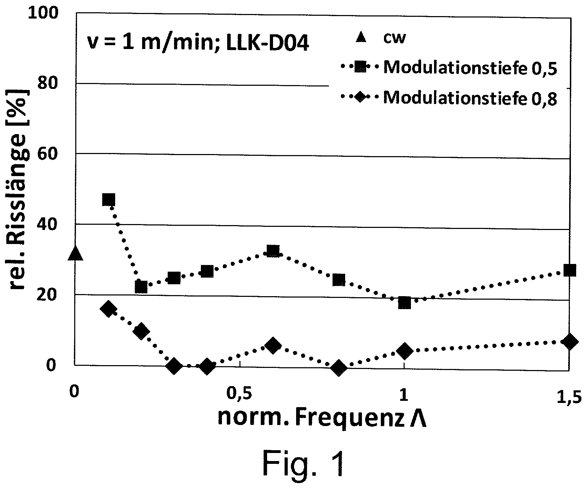

Die **Fig. 1** zeigt in einem Diagramm die relativen Risslängen einer Schweißnaht, das ist der Anteil an der Gesamtlänge der Schweißnaht, in welchem Heißrisse aufgetreten sind (nach oben aufgetragen), als Funktion der normierten Frequenz $\Lambda$, mit der die Laserleistung beim Laserstrahlschweißen der Schweißnaht sinusförmig moduliert wurde. Das Werkstück bestand jeweils aus einem Vergütungsstahl vom Typ 42CrMoS4; die Laserschweißung erfolgte mit einem Yb-YAG-Laser, und die Vorschubgeschwindigkeit betrug hier jeweils 1 m/min.

Ohne Modulation ergab sich eine relative Risslänge von ca. 31% (siehe Dreieck links bei normierter Frequenz 0). Die normierte charakteristische Oszillationsfrequenz $\Lambda_{co}$ wurde dabei zu 0,109 bestimmt.

Bei einer normierten Modulationsamplitude $\Pi$ (auch genannt Modulationstiefe) von 0,8 (vgl. die Rauten) ergab sich bei normierten Frequenzen von 0,2 bis 1,0 eine gute Reduktion der relativen Risslänge. Bei den normierten Frequenzen von 0,3, 0,4 und 0,8 war die Schweißnaht praktisch rissfrei. Bei kleineren normierten Frequenzen und größeren normierten Frequenzen steigt die Rissneigung merklich an.

Insbesondere für $\Lambda$=0,1, was hier sehr genau $\Lambda_{co}$ entspricht, findet sich eine relative Risslänge von ca. 16%, was zwar eine deutliche Reduktion gegenüber dem unmodulierten Fall darstellt, jedoch deutlich höher ist als die im Bereich $0,2 \leq \Lambda \leq 1,0$ erreichbaren Werte.

Man beachte, dass die normierte Modulationsfrequenz $\Lambda$ von 0,3 etwa dem 2,7-fachen von $\Lambda_{co}$ entspricht, und die Modulationsfrequenz $\Lambda$ von 0,8 etwa dem 7,3-fachen von $\Lambda_{co}$ entspricht.

Bei einer normierten Modulationsamplitude $\Pi$ (auch genannt Modulationstiefe) von 0,5 (vgl. die Quadrate) ergaben sich teilweise Reduzierungen der relativen Risslängen gegenüber dem unmodulierten Fall, jedoch liegen die erhaltenen relativen Risslängen deutlich über den mit $\Pi$=0,8 erreichbaren Risslängen.

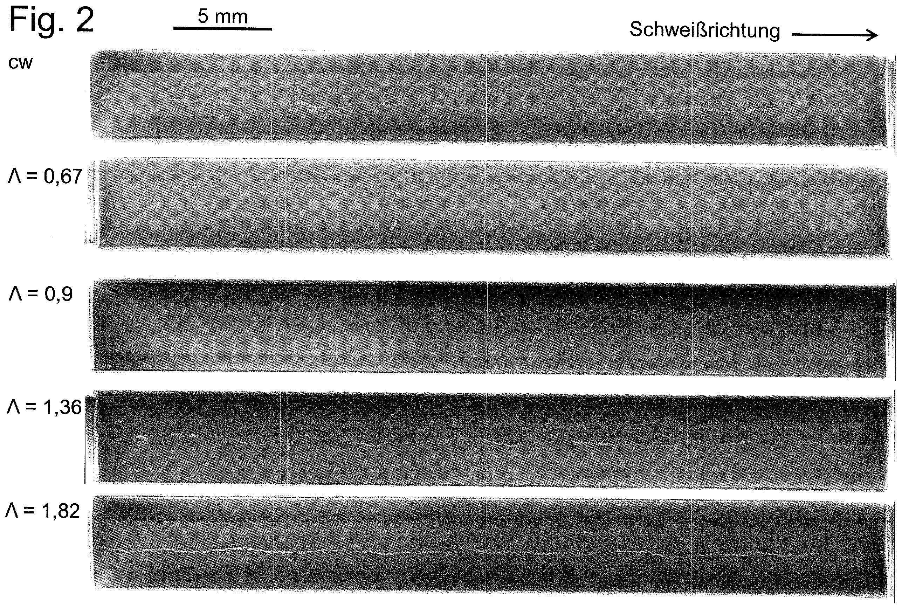

In **Fig. 2** sind Röntgenaufnahmen seitlich auf die Schweißnaht von laserstrahlgeschweißten Werkstücken dargestellt, wobei jeweils eine sinusförmige Leistungsmodulation mit verschiedenen normierte Modulationsfrequenzen A angewandt wurden. Die Werkstücke bestanden wiederum aus 42CrMoS4 Vergütungsstahl; die Einstrahltiefe EST betrug 4 mm, die Vorschubgeschwindigkeit 4 m/min, bei einem Strahlparameterprodukt von 16 mm*mrad.

Im unmodulierten Fall (continuous wave, cw) mit zeitlich konstanter Laserleistung sind zahlreiche, ausgedehnte Heißrisse in der Schweißnaht erkennbar. Die charakteristische Oszillationsfrequenz $f_{co}^{test}$ wurde zu ca. 31,9 Hz bestimmt, und die normierte, charakteristische Oszillationsfrequenz $\Lambda_{co}$ betrug 0,25 (mit $d_{f,co}^{test}$=0,52 mm und $v_{co}^{test}$=4000mm/60s, Sandwich-Testschweißung Baustahl/Edelstahl).

In den Fällen $\Lambda$=0,67 und $\Lambda$=0,9 sind keine Heißrisse in der Schweißnaht erkennbar.

Bei höheren normierten Modulationsfrequenzen $\Lambda$ von 1,36 und 1,82 sind wieder Heißrisse erkennbar, im Falle von $\Lambda$=1,82 sogar fast durchgängig. Die normierte Modulationsfrequenz $\Lambda$ wird daher bevorzugt zu 1,0 oder kleiner gewählt (unter Beachtung der übrigen Vorgaben, insbesondere des Verhältnisses zu $\Lambda_{co}$).

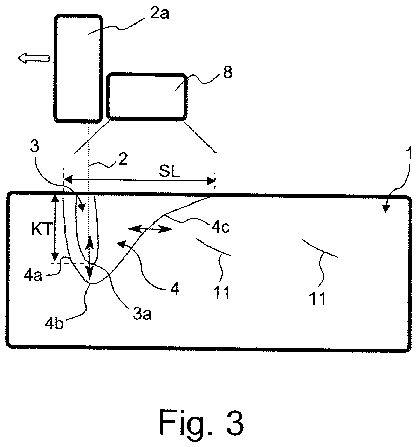

**Fig. 3** zeigt in einer Übersichtsdarstellung eine Schweißbearbeitung eines Werkstücks 1 mit einem Laserstrahl 2 zur Erläuterung der Erfindung.

Der Laserstrahl 2 wird von einer Schweißoptik 2a aus auf das Werkstück 1 gerichtet. Der Laserstrahl 2 dringt von der Oberfläche aus in das Werkstück 1 ein und verdampft in seiner unmittelbaren Umgebung das Werkstückmaterial. Es bildet sich eine Metalldampfkapillare (auch kurz genannt Kapillare) 3, die im dargestellten Fall des Einschweißens bis zu einem Grund 3a reicht (im Falle des Durchschweißen tritt der Laserstrahl unten wieder aus dem Werkstück aus, nicht dargestellt). In der Umgebung der Kapillare 3 wird das Werkstückmaterial aufgeschmolzen, wodurch sich ein sogenanntes Schmelzbad 4 von flüssigem Werkstückmaterial bildet. Da der Laserstrahl 2 beim Schweißen relativ zum Werkstück 1 bewegt wird, hier nach links, ist das Schmelzbad 4 im Querschnitt nach rechts ausgesackt. An der linken Kante 4a und der unteren Kante 4b des Schmelzbades 4 wird Werkstückmaterial aufgeschmolzen, während an der rechten Kante 4c des Schmelzbades 4 Werkstückmaterial wieder erstarrt. Dabei können Heißrisse 11 in der Schweißnaht auftreten.

Während des Laserstrahlschweißens ist die Größe des Schweißbades 4 im Allgemeinen nicht konstant, sondern schwankt in näherungsweise periodischer Weise (unabhängig von etwaigen Schweißspritzern an der Schmelzbadoberfläche); dieses Phänomen wird als Schmelzbadoszillation bezeichnet. Die Schmelzbadoszillation kann insbesondere an einer veränderlichen Schmelzbadlänge SL erkannt werden. In vielen Fällen korreliert die Schmelzbadoszillation mit der Größe der Kapillare 3, etwa der Kapillartiefe KT; man beachte jedoch, dass bei stark modulierter Laserleistung die Schmelzbadoszillation durch die Auswirkungen der Leistungsmodulation überlagert bzw. dominiert werden kann, insbesondere nahe der Kapillare 3. Die Schmelzbadoszillation kann mittels eines Messsystems 8, das hier mit der Schweißoptik 2a mechanisch gekoppelt ist, beobachtet werden.

Die so genannte charakteristische Schmelzbadoszillation wird im Rahmen der Erfindung an einem Testwerkstück vermessen, das mit einem unmodulierten Laserstrahl geschweißt wird. Die Schweißung am Testwerkstück erfolgt unter sonst gleichen Bedingungen wie die spätere Schweißung des eigentlichen Werkstücks (es darf aber bezüglich der Vorschubgeschwindigkeit und dem Brennfleck-Durchmesser abgewichen werden, da diese Parameter durch Normierung ausgeglichen werden können); insbesondere sollte das Strahlparameterprodukt und die durchschnittliche Laserleistung, ggf. einschließlich Rampen, gleich gewählt sein.

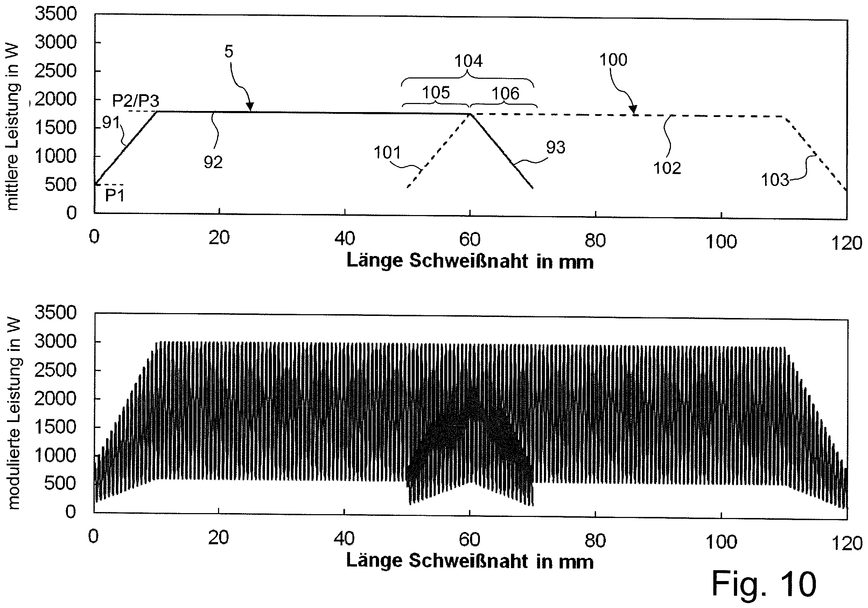

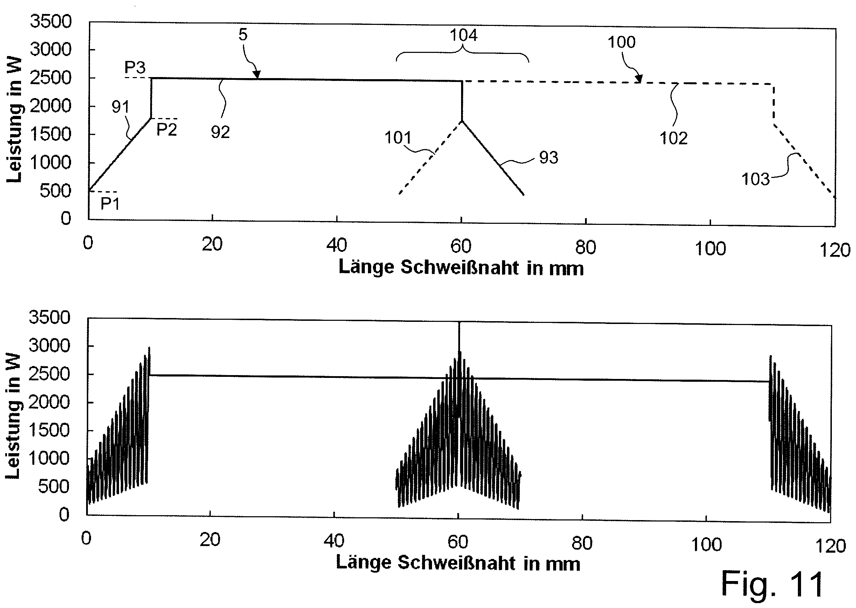

Die bei der Schweißung des Testwerkstücks beobachtete charakteristische Oszillationsfrequenz $f_{co}^{test}$ dient als Grundlage für die Bestimmung einer geeigneten Modulationsfrequenz f für die spätere Schweißung des eigentlichen Werkstücks. Die charakteristische Oszillationsfrequenz $f_{co}^{test}$ wird typischerweise für die Schweißung einer Schweißnaht insgesamt bestimmt, und entsprechend wird auch für die gesamte spätere Schweißung des eigentlichen Werkstücks eine Modulationsfrequenz f festgelegt. Die charakteristische Oszillationsfrequenz $f_{co}^{test}$ kann aber auch für einzelne Abschnitte der Schweißnaht, etwa Anfangsbereich, Mittelbereich, Endbereich oder Überlappungsbereich (siehe hinten Fig. 10, Fig. 11), separat bestimmt werden, und entsprechend jeweils separat eine Modulationsfrequenz f für die einzelnen Abschnitte für die spätere Schweißung des eigentlichen Werkstücks festgelegt werden. Letzteres sollte vor allem dann erfolgen, wenn sich die charakteristischen Oszillationsfrequenzen $f_{co}^{test}$ von verschiedenen Abschnitten der Schweißnaht deutlich voneinander unterscheiden, beispielsweise um mehr als 20% (bezogen auf die kleinere Oszillationsfrequenz). Insbesondere wenn die Anfangs- und Endbereiche als Einschweißung, aber der Mittelbereich als Durchschweißung erfolgt, sollte für Anfangs- und Endbereich separat (oder für Anfangs- und Endbereich gemeinsam ohne den Mittelbereich, etwa bei Axial- und Radialrundnähten) die charakteristische Oszillationsfrequenz $f_{co}^{test}$ ermittelt werden.

Bei der späteren Schweißung des eigentlichen Werkstücks ist durch die erfindungsgemäße Leistungsmodulation die Schmelzbadoszillation gegenüber der Schweißung des Testwerkstücks typischerweise stark vermindert oder sogar vollständig kompensiert. Falls gewünscht, kann bei der späteren Schweißung des eigentlichen Werkstücks die Schmelzbadoszillation zur Qualitätskontrolle mit kontrolliert werden.

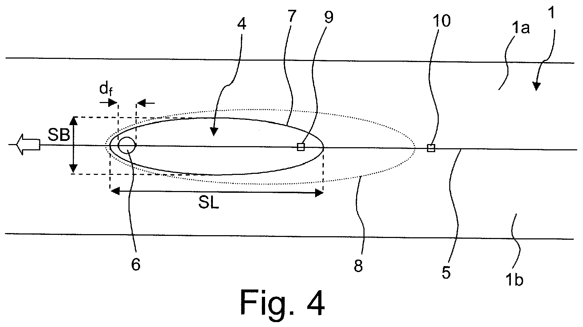

In **Fig. 4** ist in einer Aufsicht das Werkstück (bzw. Testwerkstück) 1 von Fig. 3 zu sehen, das hier aus zwei Werkstückteilen 1a, 1b besteht und entlang der Schweißnaht 5 geschweißt wird. Der Laserstrahl-Brennfleck 6 wird relativ zum Werkstück 1 nach links bewegt, so dass sich vor allem rechts des Laserstrahl-Brennflecks 6 das Schmelzbad 4 ausbildet. Dessen Größe schwankt hier im Wesentlichen periodisch zwischen einer kleinsten Ausdehnung 7 (durchgezogen dargestellt) und einer größten Ausdehnung 8 (gepunktet dargestellt).

Zur Bestimmung der charakteristischen Oszillationsfrequenz $f_{co}$ bzw. der normierten charakteristischen Oszillationsfrequenz $\Lambda_{co}$ wird eine geeignete Kenngröße, die die zeitliche Entwicklung der Größe des Schmelzbades repräsentiert, mit dem Messsystem erfasst. Am einfachsten wird dazu die Größe des Schmelzbades unmittelbar erfasst, insbesondere mit einer Wärmebildkamera. Beispielsweise kann der Teil der Fläche des Werkstücks, dessen Temperatur oberhalb der Schmelztemperatur des Werkstückmaterials (oder zwischen Schmelztemperatur und Verdampfungstemperatur) liegt, regelmäßig oder kontinuierlich erfasst werden. In der Regel genügt es aber, beispielsweise die Schmelzbadlänge SL oder die Schmelzbadbreite SB zu erfassen, etwa als Abstand der gegenüberliegenden Materialpunkte, bei denen gerade die Schmelztemperatur (bzw. Erstarrungstemperatur) herrscht. Ebenso ist es möglich, die Temperatur an einem bezüglich der Position des Laserstrahl-Brennflecks 6 festen Punkt 9 im Schmelzbad 4 oder festen Punkt 10 in einer Wärmespur des Schmelzbades 4 regelmäßig oder kontinuierlich zu erfassen. Typischerweise sind die festen Punkte 9, 10 dabei um ein Vielfaches (z.B. wenigstens 2-faches oder wenigstens 4-faches) des Durchmessers $d_f$ des Laserstrahl-Brennflecks 6 vom Rand des Laserstrahl-Brennflecks 6 beabstandet, oder auch um wenigstens ¼ der kleinsten Schmelzbadlänge SL (bei Ausdehnung 7) entlang der Schweißrichtung vom Rand des Laserstrahl-Brennflecks 6 beabstandet. Die festen Punkte 9, 10 können, müssen aber nicht in der Mitte der Schweißnaht 5 liegen.

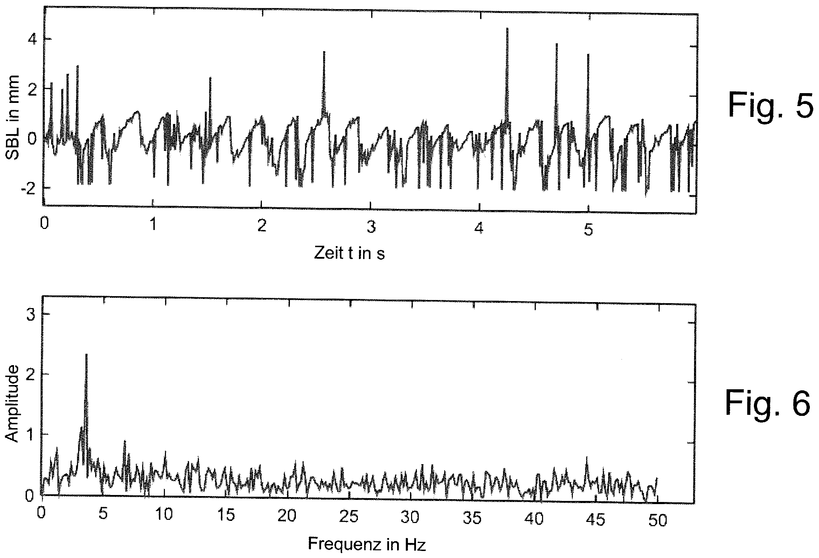

Die **Fig. 5** zeigt eine thermografisch anhand einer Wärmeabklinglänge bestimmte Schmelzbadlänge SBL (nach oben aufgetragen) als Funktion der Zeit (nach rechts aufgetragen), als Kenngröße für die Schmelzbadoszillation bei einem Laserstrahlschweißen (wiederum Werkstoff Stahl Typ 42CrMoS4, Yb-YAG-Laser, EST von 4 mm, und SPP von 16 mm*mrad), mit einem continuous wave (cw) Laser ohne Leistungsmodulation. Bereits mit bloßem Auge ist erkennbar, dass das Schmelzbad mit einer Frequenz von etwas mehr als 3 Hz oszilliert, wobei die Schmelzbadlänge je Modulationsperiode um ca. 2 mm schwankt.

Die Schmelzbadlänge (SBL) wurde hier über die Entfernung zwischen der Vorderseite der Dampfkapillare und dem Schmelzbadende definiert. Das Schmelzbadende wird hier am Ort (bezüglich der Vorschubrichtung des Lasers) desjenigen Wärmestrahlungsintensitätsprofils (senkrecht zur Vorschubrichtung) mit der kleinsten Halbwertsbreite angenommen. Das Minimum der Halbwertsbreite resultiert einerseits aus der spitz zulaufenden Schmelzbadform, und andererseits durch die Entstehung einer breiten Wärmespur hinter dem Schmelzbad. Die Ermittlung der Vorderseite der Dampfkapillare erfolgt über den Intensitätsverlauf entlang der Vorschubrichtung und wird durch den Ort definiert, an welchem die maximal messbare Intensität des Kamerasensors erstmalig erreicht wird.

In **Fig. 6** ist eine Fouriertransformation der Schmelzbadlänge SBL von Fig. 5 dargestellt; nach rechts ist die Frequenz und nach oben die (Fourier-) Amplitude des jeweiligen Frequenzanteils aufgetragen.

Bei ca. 3,6 Hz befindet sich der stärkste Frequenzanteil (Peak), also der Ort im Fourierspektrum mit der größten (Fourier-)Amplitude; bei dieser Frequenz liegt in guter Näherung die (charakteristische) Oszillationsfrequenz $f_{co}$ des Schmelzbades.

Die durchschnittliche Amplitude aller Frequenzanteile beträgt hier ca. 0,3. Hingegen liegt die Amplitude bei der Frequenz der Schmelzbadoszillation (vgl. Peak bei 3,6 Hz) bei ca. 2,4. Damit ergibt sich eine normierte Amplitude, die sich als Quotient von beobachteter Amplitude bei der Schmelzbadoszillationsfrequenz und der durchschnittlichen Amplitude aller Frequenzanteile berechnet, von ca. 8. Diese normierte (Fourier-)Amplitude kann als Maßgröße für die Amplitude der Schmelzbadoszillation herangezogen werden, falls gewünscht, etwa zur Qualitätskontrolle. Eine geringe Amplitude der Schmelzbadoszillation geht in der Regel mit einer geringen Wahrscheinlichkeit für Heißrisse in der Schweißnaht einher.

Zur Bestimmung einer geeigneten Frequenz f für eine LaserleistungsModulation sollte eine Betrachtung der normierten Frequenzen erfolgen. Eine Modulationsfrequenz f eines Lasers kann mit der Formel

$$\Lambda = \frac{f \cdot d_f}{v}$$

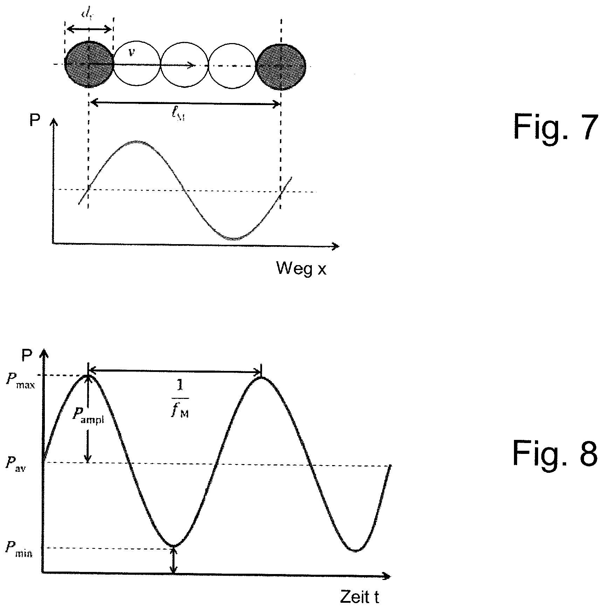

in eine normierte Frequenz $\Lambda$ umgerechnet werden, wobei $d_f$ den Durchmesser des Laserstrahl-Brennflecks und v die (konstante) Vorschubgeschwindigkeit des Laserstrahls relativ zum Werkstück während des Laserstrahlschweißens bezeichnet, vgl. hierzu auch **Fig. 7**. Der Kehrwert von $\Lambda$ gibt dabei an, wie oft der Durchmesser $d_f$ des Laserstrahl-Brennflecks in eine Modulationslänge $l_M$ passt. Die Modulationslänge $l_M$ bezeichnet diejenige Wegstrecke (vgl. x-Richtung in Fig. 7), die der Laserstrahl während einer Modulationsperiode der Laserleistung P zurücklegt.

Entsprechend kann auch die normierte, charakteristische Oszillationsfrequenz $\Lambda_{co}$ aus einer konkreten Oszillationsfrequenz $f_{co}$ einer Testmessung bestimmt werden.

Zur Charakterisierung einer Leistungsmodulation eines Laserstrahls kann auf eine normierte Modulationsamplitude $\Pi$ zurückgegriffen werden. Diese ist definiert als

$$\Pi = 1 - \frac{P_{\min}}{P_{\max}},$$

vgl. hierzu auch die **Fig. 8**. Mit $P_{\min}$ wird hierbei die minimale Laserleistung einer Modulationsperiode, und mit $P_{\max}$ die maximale Laserleistung einer Modulationsperiode (das ist beispielsweise die Zeit von einem Maximum zum nächsten Maximum der Laserleistung P) . Neben der Modulationsfrequenz f (manchmal auch als $f_M$ bezeichnet) und der normierten Modulationsamplitude $\Pi$ kann der Laserleistung noch eine mittlere (durchschnittliche) Laserleistung $P_{av}$ zugeordnet werden, das ist im Wesentlichen diejenige Leistung, um die die Laserleistung P durch die Modulation schwankt. Die Fig. 8 zeigt hier eine sinusförmige Leistungsmodulation; man beachte, dass jedoch auch andere Modulationsarten, insbesondere eine pulsförmige Modulation, möglich sind.

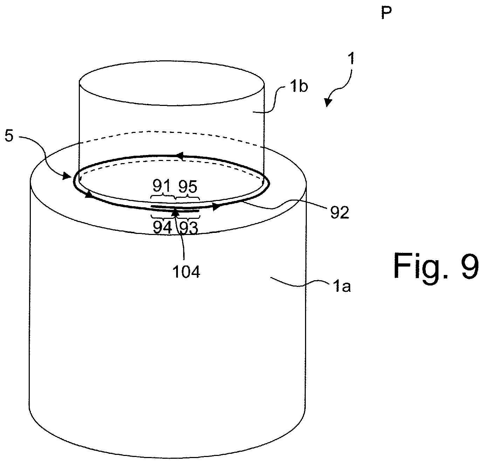

Die **Fig. 9** zeigt in schematischer Ansicht ein Werkstück 1, an dem im Rahmen der Erfindung eine Axialrundnaht geschweißt werden soll. Dadurch sollen das rohrförmige Werkstückteil 1a und dass darin eingesetzte vollzylindrische Werkzeugteil 1b entlang der Schweißnaht 5 miteinander fest verbunden werden. Man beachte, dass die Schweißnaht 5 abweichend von der Realität hier etwas aufgespreizt dargestellt ist, um die Besonderheiten besser zu erkennen.

Die Schweißnaht 5 wird in einem Anfangsbereich 91, dann weiter in einem Mittelbereich 92 und schließlich in einem Endbereich 93 geschweißt. Die Schweißnaht 5 überlappt mit sich selbst, so dass der Anfangsgereich 91 mit einem Teil 94 (des Mittelbereichs 92) der Schweißnaht 5, und der Endbereich 93 mit einem Teil 95 (des Mittelbereichs 95) der Schweißnaht 5 überlappt. Der Anfangsbereich 91 und der Endbereich 93 folgen in Umfangsrichtung der Schweißnaht 5 unmittelbar aufeinander.

In den Bereichen 91/94 und 95/93 wird die Schweißnaht 5 "doppelt" geschweißt (vgl. Überlappbereich 104). Allerdings wird während des Schweißens des Anfangsbereichs 91 die Laserleistung hochgefahren, und während des Schweißens des Endbereichs 93 die Laserleistung heruntergefahren ("Rampen"). Erfindungsgemäß findet auch während des Schweißens von Anfangs- und Endbereich eine Modulation der Laserleistung statt.

Dies kann anhand der **Fig. 10** beispielhaft ersehen werden. Diese illustriert in zwei Teildiagrammen die Laserleistung (nach oben aufgetragen) als Funktion der Zeit (nach rechts aufgetragen) beim Schweißen einer (ersten) Schweißnaht 5, die mit einer anderen (zweiten) Schweißnaht 100 überlappt, in Einschweißung.

Die Schweißnaht 5 weist einen Anfangsbereich 91, einen Mittelbereich 92 und einen Endbereich 93 auf. Die andere Schweißnaht 100 (gestrichelt dargestellt) weist ihrerseits einen Anfangsbereich 101, einen Mittelbereich 102 und einen Endbereich 103 auf. Der Überlappungsbereich 104 umfasst eine Überlappung des Anfangsbereichs 101 mit einem Teil 105 des Mittelbereich 92 und eine Überlappung des Endbereichs 93 mit einem Teil 106 des Mittelbereich 102, wobei der Anfangsbereich 101 und der Endbereich 93 unmittelbar aufeinander folgen.

Im oberen Diagramm von Fig. 10 ist die mittlere (durchschnittliche) Laserleistung (nach oben) als Funktion des Ortes (nach rechts) aufgetragen. In den Anfangs- und Endbereichen 91, 93, 101, 103 ist hier eine lineare Änderung der Laserleistung von P1 nach P2 oder umgekehrt vorgesehen ("Rampen"); die mittlere Laserleistung P3 im Mittelbereich entspricht der Leistung P2 am oberen Ende einer jeweiligen Rampe. Im unteren Diagramm von Fig. 10 ist die modulierte Laserleistung (nach oben) als Funktion des Ortes (nach rechts) aufgetragen; die Modulation erfolgt um die mittlere Laserleistung herum, hier mit überall gleicher normierter Modulationsamplitude $\Pi$ von ca. 0,8 (im Mittelbereich z.B. zwischen 600 W und 3000 W).

Durch die Modulation (mit der geeigneten Modulationsfrequenz A) kann die Heißrissbildung im Werkstück reduziert oder verringert werden, sowohl in den Anfangs- und Endbereichen 91, 93, 101, 103, als auch in den Mittelbereichen 92, 102, und insbesondere auch im Überlappbereich 104. Die durchgehende Modulation eignet sich vor allem für Einschweißungen, wobei auch in den Mittelbereichen 92, 102 der Laserstrahl im Werkstück bleibt und insbesondere nicht durchstößt.

Für die Vermessung eines Testwerkstücks kann die im oberen Diagramm von Fig. 10 angegebene Leistung ohne Modulation angewandt werden.

Fig. 11 illustriert in zwei Teildiagrammen das Schweißen einer Schweißnaht 5, die mit einer anderen Schweißnaht 100 überlappt, ähnlich wie in Fig. 10, jedoch in Durchschweißung in den Mittelbereichen. Es werden vor allem die Unterschiede zu Fig. 10 erläutert.

Im oberen Diagramm von Fig. 11, das die mittlere Laserleistung (nach oben) als Funktion des Ortes (nach rechts) zeigt, ist ersichtlich, dass am Ende der Anfangsbereiche 91, 101 die mittlere Laserleistung sprunghaft von P2 auf eine erhöhte, konstante Laserleistung P3 des jeweiligen Mittelbereichs 92, 102 ansteigt. Die erhöhte, konstante Laserleistung P3 reicht aus, um in den Mittelbereichen 92, 102 ein Durchschweißen des Werkstücks zu bewirken, d.h. der Laserstrahl tritt jenseits des Werkstücks aus diesem wieder aus. Ein vergleichbarer Sprung der Laserleistung von P3 auf P2 findet am Beginn der Endbereiche 93 und 103 statt.

In den Mittelbereichen 92, 102, in denen das Durchschweißen stattfindet, braucht die Laserleistung nicht moduliert zu werden, da beim Durchschweißen im Allgemeinen keine problematische Heißrissbildung auftritt. Jedoch findet in den als Einschweißung ausgeführten Anfangs- und Endbereichen 91, 93, 101, 103, und insbesondere im Überlappbereich 104, eine Leistungsmodulation statt, wie im unteren Diagramm von Fig. 11 ersichtlich ist. Dadurch kann die Heißrissbildung dort vermindert werden.

Für die Anfangs- und Endbereiche 91, 93, 101, 103 wird typischerweise separat (unabhängig von den Mittelbereichen 92, 102) eine charakteristische Oszillationsfrequenz $f_{co}^{test}$ mit einem Testwerkstück vorab bestimmt, um die Modulationsfrequenz f während der Fertigung des eigentlichen Werkstücks geeignet wählen zu können. Falls die Kürze der Rampen die Bestimmung der jeweiligen charakteristischen Oszillationsfrequenz $f_{co}^{test}$ stark erschwert, kann die charakteristische Oszillationsfrequenz $f_{co}^{test}$ der Rampen angenähert durch einen Schweißprozess mit konstanter Laserleistung bei der höchsten Laserleistung P2 der jeweiligen Rampe bestimmt werden; bei dieser höchsten Laserleistung P2 besteht im Allgemeinen die größte Gefahr für die Ausbildung von Heißrissen.

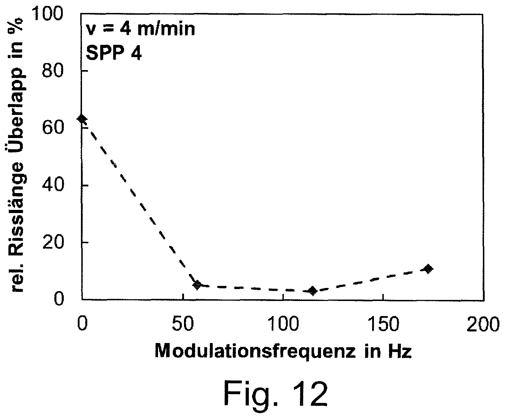

Die Fig. 12 zeigt in einem Diagramm die relativen Risslängen (nach oben), bezogen auf den Überlappbereich zweier Schweißnähte, bei laserstrahlgeschweißten Werkstücken mit Leistungsmodulation bei verschiedenen Modulationsfrequenzen f, wobei die Schweißnähte als Einschweißungen aufgeführt sind (vgl. Fig. 10). Das Werkstückmaterial war wiederum Vergütungsstahl Typ 42CrMoS4, geschweißt mit einem Yb-YAG-Laser, SPP von 4 mm*mrad, Vorschubgeschwindigkeit 4 m/min.

Bei den Modulationsfrequenzen von 57 Hz und 114 Hz können Heißrisse im Überlappbereich weitgehend vermieden werden. Im Gegensatz dazu trat bei der höheren Modulationsfrequenz von 171 Hz eine deutliche Zunahme der relativen Heißrisslänge im Überlappbereich auf. Ohne Leistungsmodulation (eingezeichnet bei 0 Hz links) ist eine erhebliche Heißrisslänge von ca. 63% aufgetreten. Charakteristische Oszillationen traten im unmodulierten Fall im Bereich 12-25 Hz auf, entsprechend einer (gemittelten) charakteristischen Oszillationsfrequenz $f_{co}^{test}$ von ca. 19 Hz, wiederum entsprechend einer (gemittelten) normierten charakteristischen Oszillationsfrequenz $\Lambda_{co}$ von ca. 0,033 (mit $d_{f,co}^{test}$=0,116 mm und $f_{co}^{test}$ =4m/min wie bei den modulierten Schweißungen).

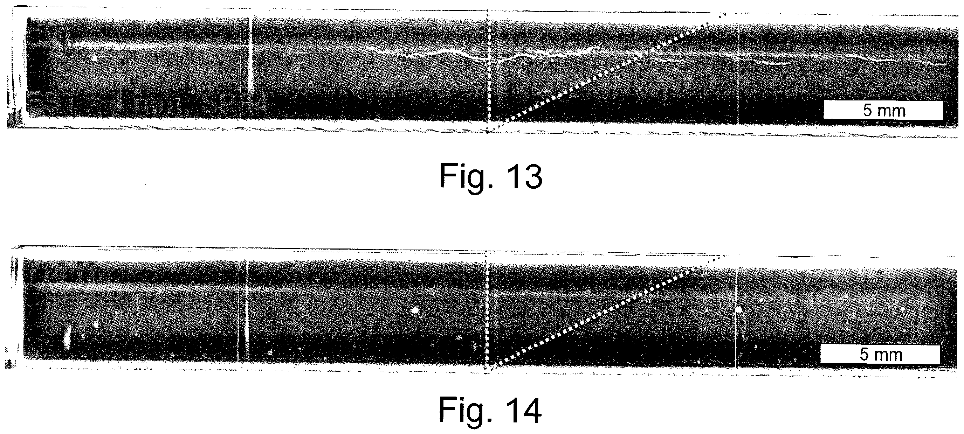

In Fig. 13 ist eine Röntgenaufnahme seitlich auf die Gesamtschweißnaht für den unmodulierten Fall der Experimente von Fig. 12 abgebildet; der Überlapppbereich ist mit einer schrägen, gepunkteten Linie markiert. Im Überlappbereich als auch im einfach geschweißten Bereich (Mittelbereich) sind deutlich Heißrisse zu erkennen.

Fig. 14 zeigt eine Röntgenaufnahme auf die Gesamtschweißnaht für den mit 114 Hz modulierten Fall der Experimente von Fig. 12; der Überlappbereich ist wiederum mit einer schrägen, gepunkteten Linie markiert. Es sind praktisch keine Heißrisse zu erkennen.

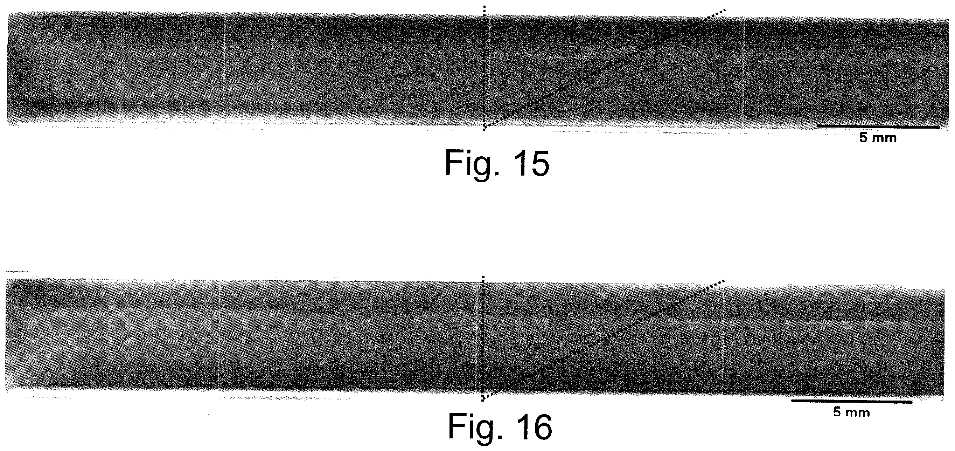

Fig. 15 zeigt eine Röntgenaufnahme eines typischen Werkstücks von der Seite mit zwei überlappenden Schweißnähten, die als Durchschweißungen ausgeführt sind. Die Laserleistung wurde nicht moduliert, auch nicht in den Rampen. Das Werkstückmaterial war wiederum Vergütungsstahl Typ 42CrMoS4, Yb-YAG-Laser, SPP von 4 mm*mrad. Im Überlappbereich (Rampenbereich), markiert durch eine schräg verlaufende, gepunktete Linie, ist deutlich eine Heißrissbildung zu erkennen. Der einfach geschweißte Bereich (Mittelbereich) der Schweißnähte ist jedoch frei von Heißrissen, was an der Durchschweißung liegt.

Fig. 16 zeigt eine Röntgenaufnahme eines typischen Werkstücks von der Seite mit zwei überlappenden Schweißnähten, die wiederum als Durchschweißungen ausgeführt sind. Die Laserleistung wurde hier in den Rampen mit A = 0,3 moduliert. Das Werkstückmaterial war wiederum Vergütungsstahl Typ 42CrMoS4, Yb-YAG-Laser, SPP von 16 mm*mrad. Im Überlappbereich (Rampenbereich), der mit einer schräg verlaufenden, gepunkteten Linie markiert ist, und auch im übrigen Werkstück, sind keine Heißrisse erkennbar.

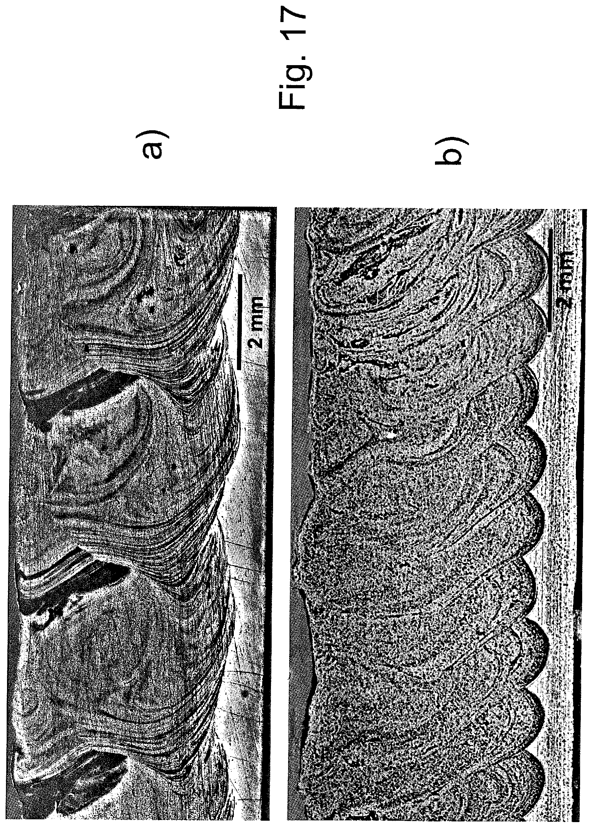

**Fig. 17** zeigt Längsschliffe a) und b) jeweils entlang einer geschweißten Schweißnaht, wobei ein Werkstückteil aus S235JR-Stahl von oben auf ein Werkstückteil aus X5CrNi18-10-Stahl unter Zuführung eines Ni-haltigen Zusatzdrahtes (2.04806) geschweißt wurde, mit unmodulierter Laserleistung a) (Laserleistung 1,8 kW, SPP 16 mm*mrad) und mit erfindungsgemäß modulierter Laserleistung b) (Laserleistung 1,8 kW, SPP 16 mm*mrad, Modulationsamplitude $\Pi$=0,8, normierte Modulationsfrequenz A=0,4), in beiden Fällen mit Schweißgeschwindigkeit 1 m/min, Drahtvorschubgeschwindigkeit 4 m/min, Fokuslage -0,2 mm. Die Werkstückteile hatten jeweils eine Dicke von 2,5 mm. Das Schmelzbad durchdrang jeweils das obere Werkstückteil und ragte in das untere Werkstückteil hinein.

Im Falle der unmodulierten Laserleistung a) sind in der Schweißnaht zahlreiche starke, linienhafte und flächige Phasengrenzen zwischen ferritisch und austenitisch erstarrten Gefügeanteilen zu erkennen, was eine geringe Durchmischung des Schmelzbades belegt. Im Falle der erfindungsgemäß modulierten Laserleistung b) erscheint die Schweißnaht hingegen fast homogen, was eine gute Durchmischung des Schmelzbades anzeigt.

**Patentansprüche**

1. Verfahren zum Laserstrahlweißen eines Werkstücks (1),
wobei ein auf das Werkstück (1) gerichteter Laserstrahl (2) relativ zum Werkstück (1) bewegt wird, sodass das Werkstück (1) entlang einer Schweißnaht (5) geschweißt wird,
wobei sich in der Umgebung des Laserstrahls (2) auf dem Werkstück (1) ein Schmelzbad (4) ausbildet,
wobei das Schmelzbad (4) eine charakteristische Oszillationsfrequenz $f_{co}$ aufweist,
wobei eine Laserleistung (P) des Laserstrahls (2) zumindest zeitweise mit einer Modulationsfrequenz f und einer Modulationsamplitude $\Pi$ moduliert wird,

$$\Pi = 1 - \frac{P\min}{P\max},$$
mit mit $P_{min}$: minimale Laserleistung während einer Modulationsperiode, und $P_{max}$: maximale Laserleitung während einer Modulationsperiode,
und wobei das Werkstück (1) aus Stahl, insbesondere Vergütungsstahl oder Einsatzstahl, gefertigt ist, **dadurch gekennzeichnet,**
**dass** die Modulationsfrequenz f so gewählt ist, dass für eine normierte, charakteristische Oszillationsfrequenz $\Lambda_{co}$ des Schmelzbades (4) und eine normierte Modulationsfrequenz $\Lambda$ gilt:
$\Lambda \geq 2,2*\Lambda_{co}$, bevorzugt $\Lambda \geq 2,7*\Lambda_{co}$,

$$\Lambda = \frac{f \cdot d_f}{v},$$
mit mit v: Vorschubgeschwindigkeit des Laserstrahls (2) relativ zum Werkstück (1), und $d_f$: Durchmesser eines Laserstrahl-Brennflecks (6) des Laserstrahls (2),

$$\Lambda_{co} = \frac{f_{co}^{test} \cdot d_{f,co}^{test}}{v_{co}^{test}}$$
und bestimmt aus einer Testmessung mit dem Laserstrahl (2) ohne Modulation der Laserleistung (P), mit $f_{co}^{test}$: gemessene charakteristische Oszillationsfrequenz bei der Testmessung; $d_{f,co}^{test}$: Durchmesser des Laserstrahl-Brennflecks (6) bei der Testmessung; $v_{co}^{test}$: Vorschubgeschwindigkeit des Laserstrahls (2) relativ zum Werkstück (1) bei der Testmessung.

2. Verfahren nach Anspruch 1, **dadurch gekennzeichnet, dass** für die normierte, charakteristische Oszillationsfrequenz $\Lambda_{co}$ des Schmelzbades (4) und die normierte Modulationsfrequenz $\Lambda$ weiterhin gilt:
$\Lambda \leq 8,5*\Lambda_{co}$, bevorzugt $\Lambda \leq 7,3*\Lambda_{co}$.

3. Verfahren nach Anspruch 1 oder 2, **dadurch gekennzeichnet, dass** für die normierte Modulationsfrequenz $\Lambda$ weiterhin gilt:
$0,2 \leq \Lambda \leq 1,0$.

4. Verfahren nach einem der vorhergehenden Ansprüche, **dadurch gekennzeichnet, dass** für die Modulationsamplitude $\Pi$ gilt:
$\Pi > 0,5$, bevorzugt $\Pi \geq 0,75$, besonders bevorzugt $\Pi \geq 0,8$.

5. Verfahren nach einem der vorhergehenden Ansprüche, **dadurch gekennzeichnet, dass** für die Modulationsamplitude $\Pi$ gilt:
$\Pi \leq 0,95$, bevorzugt $\Pi \leq 0,85$, besonders bevorzugt $\Pi \leq 0,80$.

6. Verfahren nach einem der vorhergehenden Ansprüche, **dadurch gekennzeichnet, dass** das Laserstrahlschweißen mit einer Einschweißtiefe EST ausgeführt wird, mit
$1,0$ mm < EST < $10,0$ mm,
bevorzugt $3,5$ mm $\leq$ EST $\leq 8,0$ mm.

7. Verfahren nach einem der vorhergehenden Ansprüche, **dadurch gekennzeichnet, dass** die Laserleistung (P) näherungsweise sinusförmig moduliert wird, insbesondere wobei die Sinusform durch wenigstens 12, bevorzugt wenigstens 18, Stützpunkte je Modulationsperiode angenähert ist.

8. Verfahren nach einem der vorhergehenden Ansprüche, **dadurch gekennzeichnet, dass** der Laserstrahl (2) mit einem Festkörperlaser, etwa einem Nd-YAG oder ein Yb-YAG-Laser, erzeugt wird.

9. Verfahren nach einem der vorhergehenden Ansprüche, **dadurch gekennzeichnet, dass** eine mittlere Laserleistung ($P_{av}$) des Laserstrahls (2) beim Laserstrahlschweißen eines Anfangsbereichs (91) der Schweißnaht (5) mit fortschreitendem Schweißweg erhöht wird, insbesondere linear erhöht wird, und eine mittlere Laserleistung ($P_{av}$) des Laserstrahls (2) beim Laserstrahlschweißen eines Endbereichs (93) der Schweißnaht (5) mit fortschreitendem Schweißweg verringert wird, insbesondere linear verringert wird,
und dass während des Laserstrahlschweißens des Anfangsbereichs (91) und des Endbereichs (93) die Laserleistung (P) moduliert wird.

10. Verfahren nach Anspruch 9, **dadurch gekennzeichnet, dass** auch beim Laserstrahlschweißen eines Mittelbereichs (92) der Schweißnaht (5) zwischen dem Anfangsbereich (91) und dem Endbereich (93) die Laserleistung (P) moduliert wird, und dass das Laserstrahlschweißen im Mittelbereich (92) als Einschweißung erfolgt.

11. Verfahren nach Anspruch 9, **dadurch gekennzeichnet, dass** beim Laserstrahlschweißen eines Mittelbereichs (92) der Schweißnaht (5) zwischen dem Anfangsbereich (91) und dem Endbereich (93) die Laserleistung (P) nicht moduliert wird, und dass das Laserstrahlschweißen im Mittelbereich (92) als Durchschweißung erfolgt.

12. Verfahren nach einem der Ansprüche 9 bis 11, **dadurch gekennzeichnet, dass** beim Laserstrahlschweißen des Mittelbereichs (92) eine konstante mittlere Laserleistung ($P_{av}$) angewandt wird.

13. Verfahren nach einem der Ansprüche 9 bis 12, **dadurch gekennzeichnet, dass** der Anfangsbereich (91) und der Endbereich (93) der Schweißnaht (5) jeweils mit einem anderen Teil (94, 95) der Schweißnaht (5) überlappen.

14. Verfahren nach Anspruch 13, **dadurch gekennzeichnet, dass** die anderen Teile (94, 95) der Schweißnaht (5) jeweils zum Mittelbereich (92) der Schweißnaht (5) gehören.

15. Verfahren nach einem der Ansprüche 13 oder 14, **dadurch gekennzeichnet, dass** die Schweißnaht (5) eine Axialrundnaht oder Radialrundnaht ist, insbesondere wobei der Anfangsbereich (91) und der Endbereich (93) nach vollständiger Fertigung der Schweißnaht (5) im Umfangsrichtung unmittelbar aufeinander folgen.

16. Verfahren nach einem der Ansprüche 9 bis 12, **dadurch gekennzeichnet, dass** der Anfangsbereich (91) und/oder der Endbereich (93) der Schweißnaht (5) jeweils mit einem Teil (106) einer anderen Schweißnaht (100) überlappen.

17. Verfahren nach Anspruch 16, **dadurch gekennzeichnet, dass** die jeweilige andere Schweißnaht (100) ebenfalls nach einem Verfahren gemäß einem der Ansprüche 9 bis 12 gefertigt ist, und ein jeweiliger Teil (106) der anderen Schweißnaht (100) zum Mittelbereich (102) der anderen Schweißnaht (100) gehört, insbesondere wobei der Anfangsbereich (101) der anderen Schweißnaht (100) und der Endbereich (93) der Schweißnaht (5) nach vollständiger Fertigung der Schweißnaht (5) und der anderen Schweißnaht (100) unmittelbar aufeinander folgen.

18. Verfahren nach einem der vorhergehenden Ansprüche, **dadurch gekennzeichnet, dass** beim Laserstrahlschweißen des Werkstücks (1) ein Zusatzmaterial zugeführt wird, welches sich im Schmelzbad (4) verteilt, insbesondere wobei das Zusatzmaterial als ein Zusatzdraht zugeführt wird.

19. Verfahren nach Anspruch 18, **dadurch gekennzeichnet, dass** beim Laserstrahlschweißen des Werkstücks (1) zwei Werkstückteile (1a, 1b) miteinander verschweißt werden, die aus unterschiedlichen Materialien gefertigt sind.

20. Verfahren nach Anspruch 19, **dadurch gekennzeichnet, dass** eines der Werkstückteile (1a, 1b) aus Stahl, insbesondere Vergütungsstahl, gefertigt ist, und das andere der Werkstückteile (1a, 1b) aus einem Nicht-Stahl-Werkstoff, insbesondere einer Aluminium-Legierung, gefertigt ist.

**Claims**

1. A method for laser beam welding of a workpiece (1), wherein a laser beam (2) directed at the workpiece (1) is moved relative to the workpiece (1), so that the workpiece (1) is welded along a weld seam (5), wherein a weld pool (4) is formed on the workpiece (1) in the area surrounding the laser beam (2), wherein the weld pool (4) has a characteristic oscillation frequency $f_{co}$,
wherein a laser power (P) of the laser beam (2) is modulated at least intermittently with a modulation frequency f and a modulation amplitude $\Pi$, with

$$\Pi = 1 - \frac{P_{min}}{P_{max}},$$ with $P_{min}$: minimal laser power during a modulation period, and $P_{max}$: maximal laser power during a modulation period,

and wherein the workpiece (1) is made of steel, in particular QT steel or case-hardened steel, **characterised in that**

the modulation frequency f is chosen such that for a normalized characteristic oscillation frequency $\Lambda_{co}$ of the weld pool (4) and a normalized modulation frequency $\Lambda$ applies:

$\Lambda \geq 2.2^*\Lambda_{co}$, preferably $\Lambda \geq 2.7^*\Lambda_{co}$,

$$\Lambda = \frac{f \cdot d_f}{v}$$

with $v$: feed rate of the laser beam (2) relative to the workpiece (1); and $d_f$: diameter of a laser beam focal spot (6) of the laser beam (2),

$$\Lambda_{co} = \frac{f_{co}^{test} \cdot d_{f,co}^{test}}{v_{co}^{test}}$$

and determined from a test measurement with the laser beam (2) without modulation of the laser power (P), with $f_{co}^{test}$: measured characteristic oscillation frequency in the test measurement; $d_{f,co}^{test}$: diameter of the laser beam focal spot (6) during the test measurement; $v_{co}^{test}$: feed rate of laser beam (2) relative to the workpiece (1) during the test measurement.

2. The method according to claim 1, **characterised in that** for the normalized characteristic oscillation frequency $\Lambda_{co}$ of the weld pool (4) and the normalized modulation frequency $\Lambda$ it further applies that $\Lambda \leq 8.5^*\Lambda_{co}$, preferably $\Lambda \leq 7.3^*\Lambda_{co}$.

3. The method according to claim 1 or 2, **characterised in that** for the normalized modulation frequency $\Lambda$ further applies that: $0.2 \leq \Lambda \leq 1.0$.

4. The method according to any one of the preceding claims, **characterised in that** for the modulation amplitude $\Pi$ it applies that: $\Pi > 0.5$, preferably $\Pi \geq 0.75$, especially preferably $\Pi \geq 0.8$.

5. The method according to any one of the preceding claims, **characterised in that** for the modulation amplitude $\Pi$ it applies that: $\Pi \leq 0.95$, preferably $\Pi \leq 0.85$, especially preferably $\Pi \leq 0.80$.

6. The method according to any one of the preceding claims, **characterised in that** the laser beam welding is carried out with a penetration depth EST, with 1.0 mm < EST < 10.0 mm, preferably 3.5 mm $\leq$ EST $\leq$ 8.0 mm.

7. The method according to any one of the preceding claims, **characterised in that** the laser power (P) is approximately sinusoidally modulated, in particular wherein the sine form is approximated by at least 12, preferably at least 18 supporting points per modulation period.

8. The method according to any one of the preceding claims, **characterised in that** the laser beam (2) is produced with a solid state laser, for instance an Nd-YAG or a Yb-YAG laser.

9. The method according to one of the preceding claims, **characterised in that** an average laser power ($P_{av}$) of the laser beam (2) during laser beam welding of a start region (91) of the weld seam (5) is increased, in particular is linearly increased, with advancing welding path, and an average laser power ($P_{av}$) of the laser beam (2) during laser beam welding of an end region (93) of the weld seam (5) is reduced, in particular linearly reduced, with advancing welding path, and that during the laser beam welding of the start region (91) and the end region (93), the laser power (P) is modulated.

10. The method according to claim 9, **characterised in that** also during laser beam welding of a middle region (92) of the weld seam (5) between the start region (91) and the end region (93), the laser power (P) is modulated, and that the laser beam welding in the middle region (92) is carried out as in-welding.

11. The method according to claim 9, **characterised in that** during laser beam welding of a middle region (92) of the weld seam (5) between the start region (91) and the end region (93), the laser power (P) is not modulated, and that the laser beam welding in the middle region (92) proceeds as through-welding.

12. The method according to any one claims 9 to 11, **characterised in that** during laser beam welding of the middle region (92), a constant average laser power ($P_{av}$) is applied.

13. The method according to any one of claims 9 to 12, **characterised in that** the start region (91) and the end region (93) of the weld seam (5) in each case overlap with a different part (94, 95) of the weld seam (5).

14. The method according to claim 13, **characterised in that** the other parts (94, 95) of the weld seam (5) in each case belong to the middle region (92) of the weld seam (5).

15. The method according to one of the claims 13 or 14, **characterised in that** the weld seam (5) is an axial round seam or a radial round seam, in particular wherein the start region (91) and the end region (93) directly follow one another after completion of the weld seam (5) in the circumferential direction.

16. The method according to any one of claims 9 to 12, **characterised in that** the start region (91) and/or the end region (93) of the weld seam (5) in each case overlap with a part (106) of a different weld seam (100).

17. The method according to claim 16, **characterised in that** the respective other weld seam (100) likewise is produced according to a method according to any one of claims 9 to 12, and a respective part (106) of the other weld seam (100) belongs to the middle region (102) of the other weld seam (100), in particular wherein the start region (101) of the other weld seam (100) and the end region (93) of the weld seam (5) directly follow one another after completion of the weld seam (5) and the other weld seam (100).

18. The method according to any one of the preceding claims, **characterised in that** during laser beam welding of the workpiece (1) an additive material is supplied, which spreads in the weld pool (4), in particular wherein the additive material is supplied as a supplementary wire.

19. The method according to claim 18, **characterised in that** during laser beam welding of the workpiece (1), two workpiece parts (1a, 1b) that are produced from different materials are welded to one another.

20. The method according to claim 19, **characterised in that** one of the workpiece parts (1a, 1b) is made of steel, in particular QT steel, and the other of the workpiece parts (1a, 1b) is made of a non-steel material, in particular an aluminum alloy.

## Revendications

1. Procédé de soudage au laser d'une pièce usinée (1) ;
un rayon laser (2) orienté sur la pièce usinée (1) est déplacé par rapport à la pièce usinée (1), de sorte que la pièce usinée (1) soit soudée le long d'un joint de soudure (5) ;
un bain de fusion (4) étant formé sur la pièce usinée (1) dans l'environnement du rayon laser (2), le bain de fusion (4) comportant une fréquence d'oscillation

$f_{co}$ caractéristique, une puissance de laser (P) du rayon laser (2) étant modulée au moins par moments avec une fréquence de modulation f et une amplitude

$$\Pi = 1 - \frac{P\min}{P\max}$$

de modulation $\Pi$, avec , avec $P_{min}$ : puissance de laser minimale pendant une période de modulation et $P_{max}$ : puissance de laser maximale pendant une période de modulation ; et la pièce usinée (1) étant fabriquée en acier, notamment en acier d'amélioration ou en acier de cémentation ;
**caractérisé en ce que** :
la fréquence de modulation f est sélectionnée de telle sorte que l'on a, pour une fréquence d'oscillation caractéristique normalisée $\Lambda_{co}$ du bain de fusion (4) et une fréquence de modulation normalisé $\Lambda$ :
$\Lambda \geq 2,2*\Lambda_{co}$, de façon préférée $\Lambda \geq 2,7*\Lambda_{co}$,

$$\Lambda = \frac{f \cdot d_f}{v}$$

avec avec v : vitesse d'avancement du rayon laser (2) par rapport à la pièce usinée (1) et $d_f$ : diamètre d'un foyer de gaine (6) du rayon laser

$$\Lambda_{co} = \frac{f_{co}^{test} \cdot d_{f,co}^{test}}{v_{co}^{test}}$$

(2) ; et défini à partir d'une mesure de test avec le rayon laser (2) sans modulation de la puissance de laser (P), avec $f_{co}^{test}$ : fréquence d'oscillation caractéristique mesurée lors de la mesure de test ; $d_{f,co}^{test}$ : diamètre du foyer de gaine (6) lors de la mesure de test ; $v_{co}^{test}$ : vitesse d'avancement du rayon laser (2) par rapport à la pièce usinée (1) lors de la mesure de test.

2. Procédé selon la revendication 1, **caractérisé en ce que** l'on a en outre, pour la fréquence d'oscillation $\Lambda_{co}$ caractéristique normalisée du bain de fusion (4) et la fréquence de modulation $\Lambda$ normalisée :
$\Lambda \geq 8,5*\Lambda_{co}$, de façon préférée $\Lambda \geq 7,3*\Lambda_{co}$.

3. Procédé selon la revendication 1 ou 2, **caractérisé en ce que** l'on a en outre, pour la fréquence de modulation $\Lambda$ normalisée :
$0,2 \leq \Lambda \leq 1,0$.

4. Procédé selon l'une quelconque des revendications précédentes, **caractérisé en ce que** l'on a, pour l'amplitude de modulation :
$\Pi > 0,5$, de façon préférée $\Pi > 0,75$, de façon particulièrement préférée $\Pi > 0,8$.

5. Procédé selon l'une quelconque des revendications précédentes, **caractérisé en ce que** l'on a, pour l'amplitude de modulation $\Pi$ :
$\Pi \leq 0,95$, de façon préférée $\Pi \leq 0,85$, de façon par-

ticulièrement préférée $\Pi \leq 0,80$.

6. Procédé selon l'une quelconque des revendications précédentes, **caractérisé en ce que** la soudure au rayon laser est réalisée avec une profondeur de soudure EST, avec
1,0 mm < EST < 10,0 mm ;
de façon préférée 3,5 mm < EST < 8,0 mm.

7. Procédé selon l'une quelconque des revendications précédentes, **caractérisé en ce que** la puissance de laser (P) est modulée approximativement de façon sinusoïdale, la forme sinusoïdale étant notamment approchée par au moins 12, de façon préférée au moins 18, supports pour chaque période de modulation respective.

8. Procédé selon l'une quelconque des revendications précédentes, **caractérisé en ce que** le rayon laser (2) est produit avec un laser à corps solide, notamment un laser Nd-YAG ou Yb-YAG.

9. Procédé selon l'une quelconque des revendications précédentes, **caractérisé en ce que** :

une puissance de laser moyenne ($P_{av}$) du rayon laser (2) est augmentée, notamment de façon linéaire, à mesure que le chemin de soudure progresse lors de la soudure au rayon laser d'une zone de départ (91) du joint de soudure (5) et une puissance de laser moyenne ($P_{av}$) du rayon laser (2) diminue, notamment de façon linéaire, lors de la soudure au rayon laser d'une zone de fin (93) du joint de soudure (5) à mesure que le chemin de soudure progresse ; et la puissance de laser (P) est modulée pendant la soudure au rayon laser de la zone de départ (91) et de la zone de fin (93).

10. Procédé selon la revendication 9, **caractérisé en ce que** la puissance de laser (P) est également modulée lors de la soudure au rayon laser d'une zone centrale (92) du joint de soudure (5) entre la zone de départ (91) et la zone de fin (93) et que la soudure au rayon laser est réalisée dans la zone centrale (92) sous la forme d'une soudure.

11. Procédé selon la revendication 9, **caractérisé en ce que** la puissance de laser (P) n'est pas modulée lors de la soudure au rayon laser d'une zone centrale (92) du joint de soudure (5) entre la zone de départ (91) et la zone de fin (93) et que la soudure au rayon laser est réalisée dans la zone centrale (92) sous la forme d'une soudure traversante.

12. Procédé selon l'une quelconque des revendications 9 à 11, **caractérisé en ce qu'**une puissance de laser moyenne ($P_{av}$) constante est appliquée lors de la soudure au rayon laser de la zone centrale (92).

13. Procédé selon l'une quelconque des revendications 9 à 12, **caractérisé en ce que** la zone de départ (91) et la zone de fin (93) du joint de soudure (5) se chevauchent respectivement avec une autre partie (94, 95) du joint de soudure (5).

14. Procédé selon la revendication 13, **caractérisé en ce que** les autres parties (94, 95) du joint de soudure (5) appartiennent respectivement à la zone centrale (92) du joint de soudure (5).

15. Procédé selon l'une quelconque des revendications 13 ou 14, **caractérisé en ce que** le joint de soudure (5) est une soudure circulaire axiale ou une soudure circulaire radiale, la zone de départ (91) et la zone de fin (93) se succédant notamment directement une fois la totalité du joint de soudure (5) réalisée dans la direction circonférentielle.

16. Procédé selon l'une quelconque des revendications 9 à 12, **caractérisé en ce que** la zone de départ (91) et/ou la zone de fin (93) du joint de soudure (5) se chevauchent respectivement avec une partie (106) d'un autre joint de soudure (100).

17. Procédé selon la revendication 16, **caractérisé en ce que** l'autre joint de soudure (100) respectif est également fabriqué selon un procédé selon l'une quelconque des revendications 9 à 12 et qu'une partie (106) respective de l'autre joint de soudure (100) appartient à la zone centrale (102) de l'autre joint de soudure (100), la zone de départ (101) de l'autre joint de soudure (100) et la zone de fin (93) du joint de soudure (5) se chevauchant notamment directement une fois la totalité du joint de soudure (5) et de l'autre joint de soudure (100) réalisée.

18. Procédé selon l'une quelconque des revendications précédentes, **caractérisé en ce qu'**un matériau d'apport est amené lors de la soudure au rayon laser de la pièce usinée (1), ce matériau se répartissant dans le bain de fusion (4), le matériau d'apport étant notamment amené sous la forme d'un fil d'apport.

19. Procédé selon la revendication 18, **caractérisé en ce que** deux parties de pièce usinée (1a, 1b) fabriquées à partir de matériaux différents sont soudées entre elles lors de la soudure au rayon laser de la pièce usinée (1).

20. Procédé selon la revendication 19, **caractérisé en ce qu'**une des parties de pièce usinée (1a, 1b) est fabriquée en acier, notamment en acier d'amélioration, et que l'autre partie parmi les parties de pièce usinée (1a, 1b) est fabriquée à partir d'un matériau autre que l'acier, notamment un alliage d'aluminium.

Fig. 1

Fig. 2

Fig. 3

Fig. 4

EP 3 429 795 B1

Fig. 5

Fig. 6

Fig. 7

Fig. 8

Fig. 9

Fig. 10

EP 3 429 795 B1

Fig. 11

Fig. 12

Fig. 13

Fig. 14

Fig. 15

Fig. 16

Fig. 17

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6900410 B2
- DE 60111790 T2
- US 6483072 B2
- DE 102009056592 A1
- JP H09108872 A
- DE 102012021755 A1

**In der Beschreibung aufgeführte Nicht-Patentliteratur**

- **M. SCHNEIDER.** Von Werkzeugstahl bis zur Superlegierung. *Laser-Journal,* April 2013, 24-27
- **A. HEIDER et al.** *Journal of Laser Applications,* vol. 27 (2
- Heißrisskriterium für das randnahe Laserstrahlschweißen von Aluminium. **P. STRITT et al.** Beitrag Workshop - Heißrissbildung beim Laserstrahlschweißen. Universität Stuttgart, 18. November 2014
- **M. SCHÄFER et al.** Analysing Hot Crack Formation in Laser Welding of Tempered Steel'', Tagungsbeitrag. *Lasers in Manufacturing Conference,* 2015